# EUROPEAN PATENT SPECIFICATION

(11) **EP 2 245 945 B1**
(45) Date of publication and mention of the grant of the patent: **05.12.2012**
(21) Application number: 09005989.0
(22) Date of filing: 30.04.2009
(51) Int. Cl.: A23K 1/18

(54) **Method of feeding a growing-finishing pig**
Verfahren zur Fütterung eines auswachsenden Schweins
Procédé d'alimentation de porc en fin de croissance

(43) Date of publication of application: 03.11.2010
(73) Proprietor: Tiense Suikerraffinaderij N.V., 1150 Brussel (BE); Dumoulin, 5300 Seilles (BE)
(72) Inventor: Janssens, Guy, 3001 Leuven (BE); Vanvolsem, Thibaut, 5380 Pontillas (BE)
(74) Representative: Koster, Nico

(56) References cited:
- EP-A- 0 293 935
- EP-A- 0 819 386
- WO-A-2007/057873
- FR-A- 2 690 314
- GB-A- 406 403
- US-A- 6 020 377
- US-A1- 2003 219 468
- ANONYMOUS: "Linafiber - Beneo animal nutrition"[Online] 2008, XP002544167 Retrieved from the Internet: URL:http://beneo-an.boulevart.be/Our-Produ cts/Specialised/Linafiber> [retrieved on 2009-09-02]

## Description

The invention relates to a method of feeding a growing-finishing pig, comprising the step of making available to the growing-finishing pig a feed. Such methods are widely known and practised. The feed as used in these methods is optimised towards achieving a high growth rate of the pig and towards achieving an as high as possible amount of meat of good quality on the pig.

There is, however, always an ongoing need to further optimise feed compositions that are targeted specifically to growing-finishing pigs.

It is the objective of the present invention to improve the method of feeding a growing-finishing pig, by making available a feed that results in a further optimised growth rate.

The said objective is met in that the feed contains between 0.5 and 10 wt.% of a mix, whereby the mix comprises:
- between 20 and 75 wt.% of a non-digestible fibre-containing ingredient;
- between 20 and 75 wt.% of an omega 3 fatty acid-containing ingredient; and
- between 1 and 20 wt.% of a reducing sugar-containing ingredient.

The present invention has the advantage that an increased growth rate of a growing-finishing pig can be achieved.

It is a further advantage of the present invention that the relative amount of lean meat of a pig can be increased.

It is yet a further advantage of the present invention that the overall quality of the meat and/or the overall carcass value of a growing-finishing pig can be improved/increased.

It is another advantage of the present invention that occurrence of aggressive behaviour such as tail-biting in growing/finishing pigs can be reduced.

The on-line publication "Linafiber - Beneo animal nutrition" from 2008, XP002544167, discloses that Linafiber is composed of Linseed, Chicory fiber, inulin, and the high energy sugar syrup BeneoCarb S. Linafiber is said to improve the digestion and metabolism of sows.

The present invention relates to growing-finishing pigs. These are understood to be pigs that are specifically raised with the aim of meat production. Typically, a piglet can be designated to be a growing-finishing pig after having reached a weight of about 20 kg. Also typically, the growing-finishing phase continues until the growing-finishing pig has reached a live weight lying between 80 and 180 kg, after which the pig is slaughtered. Thus, a growing-finishing pig may be described as being a pig that is raised specifically for its meat and has a live weight lying between 20 kg and 180 kg.

Due to the specific goals set in the feeding of growing-finishing pigs, the demands as set on the composition of a feed are different from the demands as set on the composition of feed that is provided to other pigs such as sows. A feed for a sow, for example, should be optimised such that the sow can produce milk - a totally different objective than that for the growing-finishing pigs.

In the method according to the present invention, a feed is made available to the growing-finishing pig. For the most part, this feed can be a feed of a known composition, comprising for example ingredients like soybean meal, corn, salt, vitamins and minerals. According to the invention, however, the feed should furthermore contain between 0.5 and 10 wt.% of a mix. This mix should contain between 20 and 75 wt.% of a non-digestible fibre-containing ingredient, between 20 and 75 wt.% of an omega 3 fatty acid-containing ingredient, and between 1 and 20 wt.% of a reducing sugar-containing ingredient.

A non-digestible fibre-containing ingredient is an ingredient that contains or even consists essentially of non-digestible fibres. As meant herein, non-digestible fibres are those that are resistant to gastric acidity, hydrolysis by intestinal brush border/pancreatic digestive enzymes, and gastrointestinal absorption. Non-digestible fibres are also referred to as dietary fibres. Examples of non-digestible fibres are cellulose, inulin, lignin, chitins, pectins, and beta-glucans. Non-digestible fibres can be soluble in water or insoluble in water. Although they are non-digestible, it is known that certain non-digestible fibres may be fermented by bacteria in the digestive tract. Preferably the non-digestible fibre-containing ingredient contains both soluble/fermentable fibres as well as insoluble fibres; more preferably a portion of the fermentable fibres consists of prebiotic fibres.

The term prebiotic fibre as used herein relates to fibres that fulfil the criteria of non-digestibility, fermentability and selective stimulating capacity. Non-digestible fibres are those that are resistant to gastric acidity, hydrolysis by intestinal brush border/pancreatic digestive enzymes, and gastrointestinal absorption. Fermentable fibres are those that are fermented by the intestinal, mainly colonic, microflora. The fibre is said to have selective stimulating capacity if it stimulates selectively the growth and/or metabolic activity of those intestinal bacteria that are associated with health and well-being, such as bifidobacteria. Fructans, in particular inulins, are widely considered to be prebiotic fibres based on convincing evidence obtained in multiple studies.

Preferred examples of ingredients that contain or consist of non-digestible fibres are chicory root, chicory pulp, inulin, sugar beet, sugar beet pulp, citrus pulp, and mixtures thereof.

Citrus pulp is, as is known, the dried residue of peel, pulp and seeds of oranges, grapefruit and other citrus fruit. Dried citrus pulp typically has a moisture content of about 10 wt.%. It is a source of feed nutrients. It is a good source of calcium, but very low in phosphorus and carotene. Dried or pelleted citrus pulp is a desirable energy feeds and can be considered in feeding programs as being a dry carbohydrate concentrate with high total digestible nutrient (TDN) content averaging about 74 %.

Sugar beet as ingredient is obtained by washing, slicing and preferably drying of sugar beets. Sugar beet pulp is the vegetable matter that remains after sugar is extracted from sliced sugar beets.

Particularly preferred are chicory root and chicory pulp. Chicory root as ingredient is obtained by washing, slicing and preferably drying of chicory roots. Chicory pulp is the vegetable matter that remains after inulin has been extracted from slices chicory roots. Usually, this fraction is pressed and dried. Although the amount of inulin in chicory pulp is typically about 3 to 15 wt.% and often about 5 to10 wt.%, and thus lower than in chicory root, chicory pulp is nevertheless a good source of inulin.

The amount of non-digestible fibre in the non-digestible fibre-containing ingredient may vary within wide limits, and is preferably lying between 10 and 100 wt.%, more preferably between 15, 20, 25, 30, 35, or 40 and 60, 70, 80, 90, or 95 wt.%.

The amount of non-digestible fibre-containing ingredient in the mix should be at least 20 wt.% so as to ensure that that there is a sufficient effect of the ingredient in the feed as a whole. Preferably, the amount of non-digestible fibre-containing ingredient in the mix is at least 25, 30, 35, 40 or even 45 wt.%. The amount of non-digestible fibre-containing ingredient in the mix should be at most 70 wt.% in order to ensure that the other necessary components in the mix are represented in a sufficient amount. Preferably, the amount of non-digestible fibre-containing ingredient in the mix is at most 65, 60, 55, 50 or even 45 wt.%.

The mix should according to the invention contain between 20 and 75 wt.% of an omega 3 fatty acid-containing ingredient.

As is known, the term omega 3 fatty acid refers to an unsaturated fatty acid that has a final carbon-carbon double bond in the n-3 position; that is, the third bond from the methyl end of the fatty acid. Some important omega 3 fatty acids are α-linolenic acid (ALA), eicosapentaenoic acid (EPA), and docosahexaenoic acid (DHA), all of which are polyunsaturated.

Omega 3 fatty acid-containing ingredients are as such known. Some examples of such ingredients are linseed, Cameline sativa seed, chia (Salvia hispanica) seed, rapeseed, fish oil, and certain algae such as Crypthecodinium cohnii and Schizochytrium, or brown algae (kelp). Instead of the seeds as mentioned it is also possible to utilize the oils pressed thereof.

It is preferred to select an ingredient that contains not only omega 3 fatty acids but in addition also omega 6 fatty acids, whereby it is preferred that the amount of omega 6 fatty acids is not more than 10 times the amount of omega 3 fatty acids in the ingredient, more preferably not more than 5 times as much.

In a preferred embodiment, linseed is used as omega 3 fatty acid-containing ingredient.

The amount of omega 3 fatty acids in the omega 3 fatty acid-containing ingredient may vary within wide limits, and preferably lies between 0.1 and 100 wt.%, more preferably between 1, 5, 10, 20, 30 and 70, 80, 90 or 95 wt.%.

The amount of omega 3 fatty acid-containing ingredient in the mix should be at least 20 wt.% so as to ensure that there is a sufficient effect of the ingredient in the feed as a whole. Preferably, the amount of omega 3 fatty acid-containing ingredient in the mix is at least 25, 30, 35, 40 or even 45 wt.%. The amount of omega 3 fatty acid-containing ingredient in the mix should be at most 70 wt.% in order to ensure that the other necessary components in the mix are represented in a sufficient amount. Preferably, the amount of omega 3 fatty acid-containing ingredient in the mix is at most 65, 60, 55, 50 or even 45 wt.%.

The mix according to the invention should contain between 1 and 20 wt.% of a reducing sugar-containing ingredient. Reducing sugars are as such known; they are defined as carbohydrates that, in basic solution, form an aldehyde or ketone group or groups. This allows the sugar to act as a reducing agent, for example in the Maillard reaction. Reducing sugars include glucose, fructose, glyceraldehyde, lactose, arabinose, maltose, isomaltulose and trehalulose. Preferred examples are isomaltulose and/or trehalulose. Significantly, sucrose is not a reducing sugar.

Reducing sugar-containing ingredients can in one embodiment consist essentially of a reducing sugar or a mixture of reducing sugars. However, other forms of reducing sugar-containing ingredients are as such also known; one class of examples of such an ingredient is the class of sugars-containing syrups . One preferred example of such a syrup is Palatinose syrup, which is a syrup containing various sugars such as Palatinose (chemical name α-D-Glucopyranosyl-(1 〉̶6)-D-fructofuranose, also known as isomaltulose) but also trehalulose (chemical name α-D-Glucopyranosyl-(1→1)-D-fructopyranose), fructose, and sucrose. More specifically, Palatinose syrup is understood to be a syrup containing:
i. between 1 wt.% and 25 wt.% fructose, preferably between 7 and 17 wt%;
ii. between 1 wt.% and 25 wt.% glucose, preferably between 5 and 15 wt.%;
iii. between 15 wt.% and 60 wt.% isomaltulose, preferably between 20 and 45 wt.%; and
iv. between 10 wt.% and 60 wt.% trehalulose,
wherein the sum of (i.), (ii), (iii) and (iv) is at least 60 wt.%, preferably at least 70 wt.%, and whereby the percentages are expressed as weight percentage of dry matter of the Palatinose syrup as a whole. Palatinose syrup is also known as Palatinose molasses; these two terms are herein considered to be synonyms.

The mix may be in the form of separately identifiable particles such as granules or pellets, or it may be fully integrated with the rest of the feed composition. If the mix is in the form of separately identifiable particles, then they may be intermixed with the other components of the feed, or they may be made available to the growing-finishing pig separately; if this is done, however, care should be taken to ensure that the growing-finishing pig does not eat too little or too much of the mix. If the mix is in the form of separately identifiable particles, it may be beneficial to incorporate into the particles, besides the ingredients as mentioned above, additives such as antioxidants. The formation of particles of the mix may be achieved by means that are as such known, such as for example pelletizing or extrusion. In one preferred embodiment, the mix is prepared through extrusion and is then typically in pellet form.

According to the invention, the amount of the mix relative to the feed as a whole should vary between 0.5 and 10 wt.%. The amount should be at least 0.5%; this has the advantage that the overall advantages of the invention can become noticeable. Preferably, the amount of mix is at least 1.0, 1.5, 2.0, 2.5 or 3.0 wt.% of the feed as a whole. For economy reasons it is preferred that the amount of the mix relative to the feed as a whole is at most 10%, preferably 9.0, 8.5, 8.0, 7.5, 7.0, 6.5 or 6.0 wt.%.

The present invention can bring several advantages. Not only can these advantages relate to the growth rates and meat quality; it was found that they can also relate to other aspects, such as for example medicament usage and general behaviour.

The occurrence of tail-biting and other aggressive behaviour patterns is of course undesirable, but unfortunately not unknown in the practice of raising growing/finishing pigs. It is therefore an advantage of the present invention that occurrence of aggressive behaviour such as tail-biting in growing/finishing pigs can be reduced. By reduction of occurrence it is meant that any such undesirable behaviour can, in the present invention, occur either less, or later, or both less and later as compared to growing/finishing pigs not fed according to the invention.

It was furthermore found that a reduced need for administering medication to the growing/finishing pigs can be among the beneficial effects sorted by the present invention. In one embodiment of the invention, there is a reduced need for medication against respiratory problems and/or influenza.

The invention will be illustrated by means of the following Example and Comparative test, without being limited thereto.

### Example 1 and Comparative Test A

A group of 696 piglets having an averaged weight of 22 kg were taken and raised as growing-finishing pigs. Of the total, 342 pigs were given *ad libitum* access to a feed according to the invention; 354 pigs were given *ad libitum* access to a reference feed. The composition of the feeds is given in the tables below. As is usual in the raising of growing-finishing pigs, there were two food compositions: initially a more protein-rich feed was given, later a follow-up feed more rich in carbohydrates.

In Example 1, both feeds contained 3 wt.% of a mix according to the invention; in the tables I and II, the mix is indicated by the commercial name Linafiber^{™}. Linafiber consists essentially of: linseed in an amount of preferably 40 - 50 wt.%, in this Example 45%, of the mix; chicory pulp in an amount of preferably 40 - 50 wt.%, in this Example 45%, of the mix; and Palatinose syrup in an amount of preferably 5 - 15 wt.%, in this Example 8%, of the mix. Linafiber furthermore may, and in the Example did, contain small amounts of less than 5 wt.% of wheat and butylated hydroxytoluene (BHT). The Linafiber as used in this example was in pellet form (extruded) and contained 12 wt.% cellulose, 4 wt.% inulin, 9.1 wt.% Omega-3 fatty acids, and 7 wt.% reducing sugars.

The extrusion of the mix into pellets was done on an Almex^{©} AL300 extruder. Prior to being fed into the extruder, all ingredients were milled (if possible) and then mixed. The so-obtained mixture of ingredients was subjected to a pre-treatment, consisting of heating to a temperature between 80 and 95°C, injecting 10 - 20% steam and 2 - 8% water. The mixture of ingredients was then fed into the extruder. The extrusion itself was carried out without further addition of water or steam; the temperature in the extruder rose to maximum 150°C, the throughput was 4500 to 5000 kg/hr. The average residence time in the extruder was less than one minute. The extruded pellets, consisting of the mix, were subjected to a drying step at 105 - 120°C, after which they had a moisture content of 9%.

On average, 50 kg of the initial feed was consumed by the pigs when the switch to the carbohydrate-rich follow-up feed was made. In the feeds used in the Comparative Test, the absence of the mix was compensated in such a fashion that the overall nutrient balance - expressed in terms of the total amount of protein, fat, and carbohydrates - was equivalent. Both Initial feeds were iso-energetic, and also both Follow-up feeds were iso-energetic.

**Table I: Initial feed**

| *Ingredient (wt.* %*)* | *1* | *A* |
|---|---|---|
| Corn | 25 | 25 |
| Barley | 21.95 | 21.95 |
| Wheat | 20.5 | 20.5 |
| Soy bean meal 46 | 18.4 | 18.4 |
| Linafiber^{™} | 3.0 | |
| Semolina | 2.8 | 2.8 |
| Rape seed meal | 2.0 | 2.0 |
| Rape seed expellers | 1.7 | 2.5 |
| Chalk | 1.08 | 1.08 |
| Soy oil | 0.8 | 1.35 |
| Sugar Beet pulp | 0.65 | 2.0 |
| Sugar molasses | 0.4 | 0.7 |
| Premix (vitamins, minerals, amino acids) | 1.72 | 1.72 |

**Table II: Follow-up feed**

| *Ingredient (wt. %)* | *1* | *A* |
|---|---|---|
| Corn | 14.407 | 15.0 |
| Barley | 23.506 | 23.491 |
| Wheat | 14.407 | 15.0 |
| Soybean meal | 9.307 | 10.123 |
| Linafiber^{™} | 3.0 | |
| Semolina | 8.5 | 8.5 |
| Rape seed expellers | 5.0 | 5.0 |
| Flour rests (cookie production) | 2.5 | 2.5 |
| Flake rests (corn flake production) | 1.0 | 1.0 |
| Rape seed meal | 0.5 | 0.5 |
| Chalk | 0.84 | 0.89 |
| Soy husks | 0.4 | 0.62 |
| Soy oil | 0.383 | 0.883 |
| Sugar Beet pulp | | 1.0 |
| Sugar Beet molasses | 1.617 | 1.617 |
| Premix (vitamins, minerals, amino acids) | 6.59 | 6.426 |

Upon having reached a weight of approximately 110 kg, the growing-finishing pigs were slaughtered. At that moment, several parameters were established on each pig, namely: weight of the pig after removal of the offals; thickness of the backfat; lean meat percentage; quality class indicator of the meat. The averaged results of the measurements on the growing-finishing pigs are given in table III below.

**Table III: Averaged results**

| | *Example* | *Comparative Test* |
|---|---|---|
| Nr. of days¹ | 136 | 137 |
| Weight (kg)² | 94,2 | 90,9 |
| Thickness of backfat (mm) | 10,9 | 10,6 |
| Lean meat percentage (wt.%)³ | 66,0 | 63,8 |
| pH of the meat⁴ | 6.2 | 6.2 |
| Conformation⁵ | 1.6 | 1.9 |
| Quality Class⁶ | 5,3 | 6,1 |
| Feed conversion (kg/kg)⁷ | 2,821 | 2,869 |

### Legend to table III

1) Number of days between initiation of the trial of the piglet (having an averaged weight of 22 kg) and slaughter
2) Measured 24 hrs. after slaughter and removal of all offals
3) Lean meat percentage predicted by measuring both the meat and backfat thickness by Sydel-CGM reflectometer on the *longissimus dorsi* muscle on the pig carcass. A difference of over 2% lean meat as observed in this trial is highly significant.
4) Measured 35 minutes after the death of the animal using a WTW pH197 measuring unit with a Mettler-Toledo penetrating measuring probe. A value lying between 6.10 and 6.80 is considered to be optimal.
5) The conformation is, as is known, calculated by combining the maximum length of the ham and the curvature at a selected spot. The value is determined via a measurement on a picture taken of hams in silhouette before a lighting cabinet. The lower the number of the conformation, the better the quality is judged to be, whereby a difference of 0.3 as noted here is highly significant.
6) The class indicator takes into account the lean meat percentage and the conformation. The lower the indicator, the higher the value of the carcass.
7) The amount of feed (in kg) needed for a weight gain of 1 kg, averaged out over the period of growth starting at 22 kg until 105 kg.

As can be seen in table III, the growing-finishing pigs that were fed according to the invention were heavier, although they had had on average one day less to grow. Moreover, in order to reach the end weight less feed was needed. Furthermore, the amount of lean meat on the pigs carcasses was much higher.

The medical treatments administered to the growing/finishing pigs were monitored. In particular, records were kept on the administration of medicaments against:
- Worms (medicaments: Ecomectin ^{®}; Levamisol),
- Respiratory problems (medicament Doxycycline).
- Flu (medicaments: Origin^{®}, Selectan)

The total costs (cumulative for all growing/finishing pigs and over the whole of the test period) per medicament are summarized in Table IV

**Table IV: Costs of medication (€, cumulative)**

| *Medicament* | *Example* | *Comparative Test* |
|---|---|---|
| Ecomectin | 33.6 | 33.8 |
| Levamisol | 50.1 | 50.5 |
| Doxycycline | 40.1 | 67.3 |
| Origin | 23.6 | 23.8 |
| Selectan | 0 | 85.5 |
| *Total cost* | 147.4 | 260.9 |

As is clear from Table IV, the costs of medication were significantly lower in the Example as compared to the Comparative Test.

## Claims

1. Method of feeding a growing-finishing pig, comprising the step of making available to the growing-finishing pig a feed, whereby the feed contains between 0.5 and 10 wt.% of a mix, whereby the mix comprises:
• between 20 and 75 wt.% of a non-digestible fibre-containing ingredient;
• between 20 and 75 wt.% of an omega 3 fatty acid-containing ingredient; and
• between 1 and 20 wt.% of a reducing sugar-containing ingredient.

2. Method according to claim 1, wherein the non-digestible fibre-containing ingredient is selected from the group consisting of chicory root, chicory pulp, inulin, sugar beet, sugar beet pulp, citrus pulp, and mixtures thereof.

3. Method according to claim 2, wherein the non-digestible fibre-containing ingredient comprises chicory pulp.

4. Method according to any one of claims 1 - 3, wherein the omega 3 fatty acid-containing ingredient is selected from the group consisting of linseed, Cameline sativa seed, chia (Salvia hispanica) seed, rapeseed, oil of any the aforementioned seeds, fish oil, algae, and mixtures thereof.

5. Method according to claim 4, wherein the omega-3 fatty acid-containing ingredient comprises linseed.

6. Method according to any one of claims 1 - 3, wherein the reducing sugar-containing ingredient comprises isomaltulose and/or trehalulose.

7. Method according to any one of claims 1 - 6, wherein the mix is prepared via extrusion of a mixture containing the ingredients.

## Patentansprüche

1. Verfahren zum Füttern eines Mastschweins, umfassend den Schritt, dass dem Mastschwein ein Futter verfügbar gemacht wird, das zwischen 0,5 und 10 Gew.-% einer Mischung enthält, wobei die Mischung Folgendes umfasst:
• zwischen 20 und 75 Gew.-% eines unverdaulichen ballaststoffhaltigen Bestandteils;
• zwischen 20 und 75 Gew.-% eines omega-3-fettsäurehaltigen Bestandteils; und
• zwischen 1 und 20 Gew.-% eines Bestandteils, der reduzierenden Zucker enthält.

2. Verfahren nach Anspruch 1, wobei der unverdauliche ballaststoffhaltige Bestandteil aus der Gruppe bestehend aus Zichorienwurzel, Zichorienpülpe, Inulin, Zuckerrübe, Zuckerrübenpülpe, Citrusfruchtfleisch und Gemischen davon ausgewählt ist.

3. Verfahren nach Anspruch 2, wobei der unverdauliche ballaststoffhaltige Bestandteil Zichorienpülpe enthält.

4. Verfahren nach einem der Ansprüche 1-3, wobei der omega-3-fettsäurehaltige Bestandteil, aus der Gruppe bestehend aus Leinsamen, Camelina-sative-Samen, Chia (Salvia hispanica)-Samen, Rapssamen, Öl von einem beliebigen der genannten Samen, Fischöl, Algen und Gemischen davon ausgewählt ist.

5. Verfahren nach Anspruch 4, wobei der omega-3-fettsäurehaltige Bestandteil Leinsamen umfasst.

6. Verfahren nach einem der Ansprüche 1-3, wobei der Bestandteil, der reduzierenden Zucker enthält, Isomaltulose und/oder Trehalulose umfasst.

7. Verfahren nach einem der Ansprüche 1-6, wobei die Mischung durch Extrudieren eines Gemischs, das die Bestandteile enthält, hergestellt wird.

## Revendications

1. Procédé d'alimentation d'un porc croissance et finition, comprenant l'étape consistant à mettre à disposition du porc croissance et finition un aliment, l'aliment contenant entre 0,5 et 10 % en poids d'une préparation, la préparation comprenant:
- entre 20 et 75 % en poids d'un ingrédient contenant des fibres non digestibles;
- entre 20 et 75 % en poids d'un ingrédient contenant des acides gras oméga-3; et
- entre 1 et 20 % en poids d'un ingrédient contenant des sucres réducteurs.

2. Procédé selon la revendication 1, dans lequel l'ingrédient contenant des fibres non digestibles est choisi dans le groupe constitué par la racine de chicorée, la pulpe de chicorée, l'inuline, la betterave à sucre, la pulpe de betterave à sucre, la pulpe d'agrume et les mélanges de celles-ci.

3. Procédé selon la revendication 2, dans lequel l'ingrédient contenant des fibres non digestibles comprend de la pulpe de chicorée.

4. Procédé selon l'une quelconque des revendications 1-3, dans lequel l'ingrédient contenant des acides gras oméga-3 est choisi dans le groupe constitué par la graine de lin, la graine de *Camelina sativa,* la graine de chia *(Salvia hispanica),* la graine de colza, l'huile de n'importe lesquelles des graines susmentionnées, l'huile de poisson, les algues et les mélanges de celles-ci.

5. Procédé selon la revendication 4, dans lequel l'ingrédient contenant des acides gras oméga-3 comprend de la graine de lin.

6. Procédé selon l'une quelconque des revendications 1-3, dans lequel l'ingrédient contenant des sucres réducteurs comprend de l'isomaltulose et/ou du tréhalulose.

7. Procédé selon l'une quelconque des revendications 1-6, dans lequel la préparation est préparée par extrusion d'un mélange contenant les ingrédients.
